# EUROPEAN PATENT APPLICATION

(11) **EP 3 879 648 A1**
(43) Date of publication of application: **15.09.2021**
(21) Application number: 18939733.4
(22) Date of filing: 09.11.2018
(51) Int. Cl.: H02G 3/14, H01R 13/74, A47B 21/06

(54) **COVER AND TABLE-TOP UNIT FOR ELECTRICAL AND/OR ELECTRONIC CONNECTIONS**

(71) Applicant: Schneider Electric España, S.A., 08019 Barcelona (ES)
(72) Inventor: REBOLÉ OLLETA, José Antonio, 31100 PUENTE LA REINA (NAVARRA) (ES); IBARRA ROMERO, Pedro, 31100 PUENTE LA REINA (NAVARRA) (ES); TRONCIN, Maeva Michèle Denise, 31100 PUENTE LA REINA (NAVARRA) (ES); DELOY, Jonathan Damien, 38320 EYBENS (ISERE) (FR)
(74) Representative: Evens, Paul Jonathan
(86) International application number: PCT/ES2018/070726
(87) International publication number: WO 2020/094892

(57) **Abstract**

Cover (10) and table unit with electrical and/or electronic connections, the cover (10) comprising a first portion (11) with an annular shape which has a housing (14) for receiving the table unit which has the electrical and/or electronic connections, a second portion (12) for sealing the electrical and/or electronic connections of the table unit, and a hinge (13) which joins the first portion (11) to the second portion (12) of the cover (10).

## Description

### Technical field

The present invention relates to the units which are utilised to provide electrical and/or electronic connections in a work table, proposing a cover with an improved structural configuration which can be easily coupled or uncoupled from the table unit so that, depending on their needs, the user can utilise the table unit as permanently open, or with the cover which enables the connections to be selectively sealed. Another object of the invention is the table unit with electrical and/or electronic connections which incorporates said cover.

### State of the art

In recent years, electronic devices, such as laptops, mobile phones, tablets, music players, external hard drives, etc. have become widely used, which have become common elements in both daily life and at work.

These types of devices, which are usually utilised at the tables of workstations, have electrical and/or electronic connections which are essential for the correct operation thereof. These connections, which are utilised to electronically power devices and to enable them to send or receive data, are generally arranged in the wall, it being frequent for all the cabling which goes from the connections of the wall to the devices to be disordered, which gives the workstation a bad appearance, as well as being uncomfortable for the user.

In order to solve this problem, and improve the order and appearance of the workstations, utilising units which are directly integrated into the work tables and which incorporate the electrical and/or electronic connections required by the electronic devices for the operation thereof is known.

This type of unit comprises a main body which is insertable into the work table and which has electrical and/or electronic connections, and a fastening body which is utilised to fasten the main body to the table.

The problem with this type of unit is that the connections are exposed, such that there is a risk that any type of fluid that the user has on the work table, such as water, soft drinks or coffee, can spill in the connections causing an electrical failure. On some occasions, a cover is arranged on the main body for the passage of cables, which although it partially closes the passage to the connections, does not do so completely, since the function thereof is to enable the passage of cables.

Document CN202712636 shows such a unit having a main body with electrical and/or electronic connections, a body for fastening the main body to a work table, and a cover for sealing the connections of the main body. While it is true that the cover protects the connections of the main body from possible spillage of a fluid, some types of users may require the use of the unit to be permanently open instead of having to open the cover each time access to the connections is required. This option is not possible with said unit, since the cover is directly hinged to the main body, requiring the hinge to be disassembled in order to be able to utilise the unit without a cover.

### Object of the invention

In accordance with the present invention, a cover is proposed for table units with electrical and/or electronic connections which can be easily coupled or uncoupled in order to be able to utilise the table unit with or without a cover depending on the needs of the user.

The cover comprises:
- a first portion which has a housing for receiving the table unit which has the electrical and/or electronic connections,
- a second portion for sealing the electrical and/or electronic connections of the table unit, and
- a hinge which joins the first portion to the second portion of the cover.

Another object of the invention is a table unit with electrical and/or electronic connections which is equipped with the cover. The table unit comprises:
- a main body insertable into the table which has:
   ∘ an upper end wherein the electrical and/or electronic connections are arranged,
   ∘ a lower end for receiving cabling of the electrical and/or electronic connections,
   ∘ an outer surface, at least partially threaded, and
   ∘ a perimeter edge arranged at the upper end which extends radially towards the outside of the main body, and
- a fastening body for fastening the main body to the table which has:
   ∘ a threaded inner surface for acting on the outer surface of the main body, and
   ∘ a perimeter flange which extends radially towards the outside of the fastening body,
such that in use the first portion of the cover is axially retained between the perimeter edge of the main body and the perimeter flange of the fastening body.

In accordance with all this, the cover object of the invention is a result of features which are highly advantageous for the function of protecting the table units for which it is intended, enabling the easy connection and disconnection thereof to the unit, thus acquiring its own identity and preferred character with respect to other conventional covers which are used for this function.

### Description of the figures

Figure 1 shows an exploded perspective view of the table unit with electrical and/or electronic connections of the invention.
Figure 2 shows a perspective view in the open position of the cover of the invention.
Figure 3 shows a top view of another exemplary embodiment of the cover.

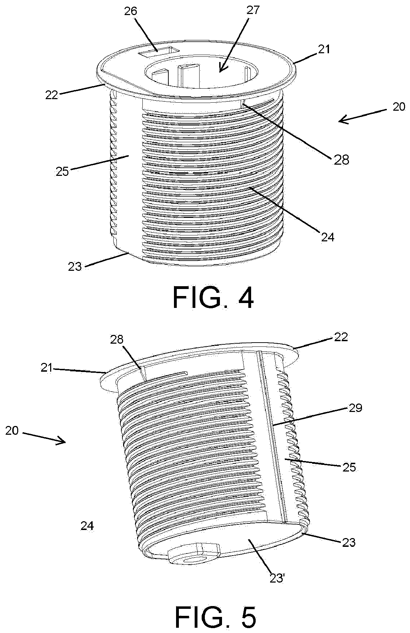

Figure 4 shows a perspective view of the main body of the table unit.
Figure 5 shows another perspective view of the main body of the table unit.
Figure 6 shows a cross-sectional view of the unit arranged in a work table with the cover in the open position.

### Detailed description of the invention

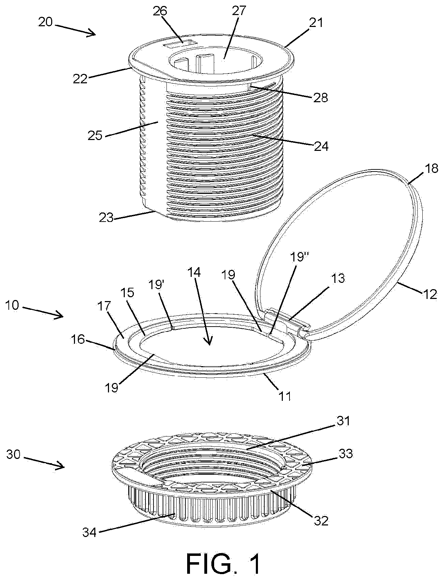

Figure 1 shows an exploded view of a cover (10) and a table unit with electrical and/or electronic connections comprising a main body (20) and a fastening body (30).

The main body (20) has the electrical and/or electronic connections and is insertable into a table (40), such as for example the table of a workstation, for which a housing must be made in the table (40) with a shape reciprocal to the shape of the main body (20). The fastening body (30) is utilised to fasten the main body (20) to the table (40).

Depending on the needs of the user, the table unit can be used by utilising only the main body (20) and the fastening body (30), or by utilising the cover (10), the main body (20) and the fastening body (30), in which case the fastening body (30) is utilised, both to fasten the main body (20) to the table (40) and to fasten the cover (10) to the main body (20).

The cover (10) is formed by two portions (11,12) hinged (13) in rotation. Thus, the cover (10) comprises an annular first portion (11), wherein a housing (14) is defined for receiving the table unit, a second portion (12) which is intended to seal the electrical and/or electronic connections of the table unit, and a hinge (13) which joins the first portion (11) to the second portion (12) of the cover (10) enabling the folding of one of the portions (12) onto the other (11).

Specifically, the housing (14) of the first portion (11) of the cover (10) is configured to receive the main body (20) of the table unit, such that said first portion (11) is utilised to join the cover (10) to the main body (20), said first portion (11) of the cover (10) being axially retained between the main body (20) and the fastening body (30) when the unit is installed in the table (40).

The first portion (11) of the cover (10) has an upper surface with a first recess (15) and a second recess (16) which are separated by a partition (17). The second portion (12) of the cover (10) has a lower surface with a partially annular projection (18) which projects vertically downward.

The first recess (15) of the first portion (11) of the cover (10) is adapted to receive the main body (20), while the second recess (16) of the first portion (11) of the cover (10) is adapted to receive the partially annular projection (18) of the second portion (12) of the cover (10).

The housing (14) of the first portion (11) of the cover (10) has a shape reciprocal to the main body (20) of the table unit. Preferably, the housing (14) has an annular shape with at least one chamfer (19) which prevents the rotation of the cover (10) with respect to the main body (20) when the cover (10) is arranged in the table unit. Even more preferably, there are two chamfers (19), located in diametrically opposite positions of the housing (14).

Additionally, the housing (14) has first notches (19') adapted to receive protrusions (28) of the main body (20) of the table unit.

Additionally, the housing (14) has a second notch (19") adapted to cooperate with a rib (29) of the main body (20) of the table unit. The second notch (19") is arranged in one of the chamfers (19). Said second notch (19") forces the cover (10) to be arranged in the main body (20) in a single position, thus enabling an unequivocal assembly of the cover (10) in the main body (20).

The main body (20) comprises an upper end (21) with a peripheral edge (22) which extends radially towards the outside, a lower end (23), and an outer surface (24) which is at least partially threaded.

The lower end (23) is closed with a lower cover (23') which has a passage for cables.

The perimeter edge (22) of the upper end (21) of the main body (20) is configured to fit into the first recess (15) of the first portion (11) of the cover (10).

The perimeter edge (22) has a thickness identical to the height of the partition (17) of the first portion (11) of the cover (10), and therefore to the height of the first recess (15), such that the perimeter edge (22) is flush with the partition (17) when the cover (10) is arranged in the main body (20).

Preferably, the second portion (12) of the cover (10) has at least one transparent area in order to enable the viewing of the electrical and/or electronic connections of the table unit.

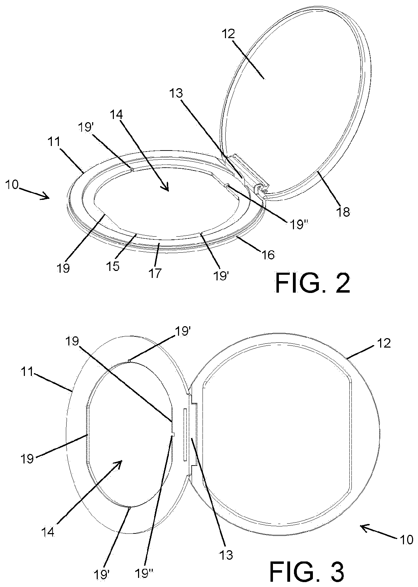

For example, figure 3 shows an embodiment of the cover (10) with a transparent portion by way of a window in the second portion (12) of the cover (10) which enables the electrical and/or electronic connections of the table unit to be viewed when the cover is closed.

Alternatively, the second portion (12) of the cover (10) can be transparent in its entirety, or partially transparent, in order to be able to view the electrical and/or electronic connections of the table unit when the cover is closed. It is also possible for the two portions (11,12) of the cover (10) to be transparent or partially transparent in order to enable said viewing.

Figures 1 and 2 show another embodiment of the cover (10) with a second opaque portion (12) which does not enable the viewing of the inside of the table unit when the cover (10) is closed. Thus, by way of example, the window of the second portion (12) of the cover (10) can be transparent, opaque, or partially transparent.

The electrical and/or electronic connections are arranged at the upper end (21) of the main body (20), such that the user accesses the connections through said upper end (21), while through the open lower end (23) the electrical and/or electronic connections receive the electrical power and data from the installation to which the table unit is connected.

The outer surface (24) of the main body (20) has at least one chamfer (25) which is adapted to cooperate with the chamfer (19) of the housing (14) of the cover (10).

As shown in the figures, the main body (20) has two chamfers (25) arranged in diametrically opposite positions which cooperate with the two reciprocal chamfers (19) of the housing (14) of the cover (10).

The main body (20) has two protrusions (28) at the upper end thereof located immediately below the perimeter edge (22), which protrusions (28) receive the first notches (19') of the housing (14) of the cover (10).

The rib (29) which cooperates with the second notch (19") for housing (14) the cover (10) is arranged in one of the chamfers (25) in order to enable an unequivocal assembly of the cover (10) in the main body (20).

The fastening body (30) has a threaded inner surface (31) which is configured to cooperate with the outer surface (24) of the main body (20) and a perimeter flange (32) which extends radially towards the outside and which is intended to rest against the table (40) wherein the unit is installed.

The perimeter flange (32) has an upper surface (33) with a rough shape which is especially configured to increase the coefficient of friction between the fastening body (30) and the table (40). Preferably, as shown in figure 1, the upper surface (33) of the perimeter flange (32) is obtained with prominent formations of the fastening body (30).

The fastening body (30) has an outer surface (34) with vertical ribs which enable the grip on the fastening body (30) to be improved.

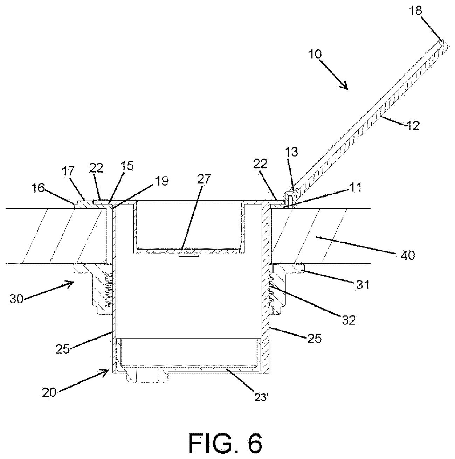

With all this, and as seen in detail in figure 6, in order to install the unit with the cover (10), first, the main body (10) is introduced into the housing (14) of the first portion (11) of the cover (10), leaving the perimeter edge (22) of the upper end (21) of the main body (20) fitted in the first recess (15) of the first portion (11) of the cover (10).

Next, the main body (20) is introduced into a housing which must have been made previously in the table (40), and the fastening body (30) is threaded into the main body (20) until the perimeter flange (32) of the fastening body (30) abuts against the lower portion of the table (40), such that the first portion of the cover (10) is axially retained between the perimeter edge (22) of the main body (20) and the table (40).

The electrical and/or electronic connections of the main body (20) can be, for example, among others, a USB port, a power outlet, a network connector, an HDMI port, etc.

Without limitation, the main body (20) shown in the figures has a USB port (26) and an indentation (27) with a power outlet.

## Claims

1. A cover (10) for a table unit with electrical and/or electronic connections, **characterised in that** it comprises:
• a first portion (11) which has a housing (14) for receiving the table unit which has the electrical and/or electronic connections,
• a second portion (12) for sealing the electrical and/or electronic connections of the table unit, and
• a hinge (13) which joins the first portion (11) to the second portion (12) of the cover (10).

2. The cover (10) for a table unit with electrical and/or electronic connections, according to the preceding claim, **characterised in that** the first portion (11) has a first recess (15) which is adapted to receive a perimeter edge (22) of the table unit.

3. The cover (10) for a table unit with electrical and/or electronic connections, according to any one of the preceding claims, **characterised in that** the first portion (11) has a second recess (16) and the second portion (12) has an annular projection (18) which projects vertically downward, the second recess (16) being adapted to receive the annular projection (18).

4. The cover (10) for a table unit with electrical and/or electronic connections, according to any one of the preceding claims, **characterised in that** the first (15) and second recesses (16) are separated by a partition (17).

5. The cover (10) for a table unit with electrical and/or electronic connections, according to any one of the preceding claims, **characterised in that** the housing (14) of the first portion (11) of the cover (10) has an annular shape with at least one chamfer (19) which is adapted to cooperate with a reciprocal chamfer (25) of the table unit.

6. The cover (10) for a table unit with electrical and/or electronic connections, according to the preceding claim, **characterised in that** the housing (14) has two chamfers (19) arranged in diametrically opposite positions.

7. The cover (10) for a table unit with electrical and/or electronic connections, according to any one of the preceding claims, **characterised in that** the housing (14) has first notches (19') which are adapted to receive protrusions (28) of the table unit.

8. The cover (10) for a table unit with electrical and/or electronic connections, according to any one of the preceding claims, **characterised in that** the housing (14) has a second notch (19') which is adapted to cooperate with a rib (29) of the table unit.

9. The cover (10) for a table unit with electrical and/or electronic connections, according to any one of the preceding claims, **characterised in that** the second portion (12) of the cover (10) has at least one transparent area for viewing the electrical and/or electronic connections of the table unit.

10. A table unit with electrical and/or electronic connections equipped with the cover (10) according to any one of the preceding claims, **characterised in that** it comprises:
• a main body (20) insertable into the table which has:
∘ an upper end (21) wherein the electrical and/or electronic connections are arranged,
∘ a lower end (23) for receiving cabling of the electrical and/or electronic connections,
∘ an outer surface (24), at least partially threaded, and
∘ a perimeter edge (22) arranged at the upper end (21) which extends radially towards the outside of the main body (20), and
• a fastening body (30) for fastening the main body (20) to the table which has:
∘ a threaded inner surface (31) for acting on the outer surface (24) of the main body (20), and
∘ a perimeter flange (32) which extends radially towards the outside of the fastening body (30),
such that in use the first portion of the cover (10) is axially retained between the perimeter edge (22) of the main body (20) and the perimeter flange (32) of the fastening body (30).

11. The table unit with electrical and/or electronic connections, according to the preceding claim, **characterised in that** the outer surface (24) has at least one chamfer (25) which is adapted to cooperate with the chamfer (19) of the housing (14) of the cover (10).

12. The table unit with electrical and/or electronic connections, according to the preceding claim, **characterised in that** the outer surface (24) has two chamfers (25) arranged in diametrically opposite positions, one of the chamfers (25) having a rib (29) in order to cooperate with the second notch (19") of the housing (14) of the cover (10).

13. The table unit with electrical and/or electronic connections, according to any one of claims 10 to 12, **characterised in that** the perimeter flange (32) has an upper surface (33), with a rough shape.

14. The table unit with electrical and/or electronic connections, according to any one of claims 10 to 13, **characterised in that** the fastening body (30) has an outer surface (34) with vertical ribs.

15. The table unit with electrical and/or electronic connections, according to any one of claims 10 to 14, **characterised in that** the perimeter edge (22) has a thickness identical to the height of the partition (17) of the first portion (11) of the cover (10).
